# EUROPÄISCHE PATENTSCHRIFT

(11) **EP 0 861 760 B1**
(45) Veröffentlichungstag und Bekanntmachung des Hinweises auf die Patenterteilung: **26.03.2003**
(21) Anmeldenummer: 98101146.3
(22) Anmeldetag: 23.01.1998
(51) Int. Cl.: B60R 21/20

(54) **Flexibler Airbag-Behälter**
Flexible air bag housing
Boîtier flexible pour sac gonflable

(30) Priorität: 15.02.1997 DE 19705829
(43) Veröffentlichungstag der Anmeldung: 02.09.1998
(73) Patentinhaber: TRW Automotive Safety Systems GmbH, 63743 Aschaffenburg (DE)
(72) Erfinder: Bohn, Stefan, 63773 Goldbach (DE)
(74) Vertreter: Degwert, Hartmut, Dipl.-Phys.

(56) Entgegenhaltungen:
- EP-A- 0 471 746
- EP-A- 0 687 597
- DE-A- 4 137 691
- US-A- 5 498 030
- US-A- 5 564 739

## Beschreibung

Die Erfindung betrifft einen flexiblen Behälter für die Unterbringung eines zusammengefalteten Airbags und eines rohrförmigen Gasgenerators, insbesondere für die Beifahrer-Frontseite eines Fahrzeugs, wie aus der EP-A-0 687 597 bekannt.

Rasch aufblasbare Luftkissen, sogenannte Airbags gehören heute weitgehend zur Standardausrüstung von Personenkraftfahrzeugen. Dabei wird - ausgehend von einem elektronisch ermittelten Verzögerungssignal - mittels eines pyrotechnischem Zünders eine explosionsartige Verbrennung mit Gaserzeugung ausgelöst und/oder ein komprimiertes Druckgas freigesetzt und innerhalb von 20 bis 60 Millisekunden der zusammengefaltete Airbag aufgeblasen, der dadurch zu einem Luftpolster wird, mit dem ein hartes Aufschlagen des Fahrzeuginsassen auf die ihn umgebenden Karosserieteile zumindest in einer Beschleunigungsrichtung verhindert wird, wenn bei einem Zusammenstoß eine vorgegebene kritische Verzögerung festgestellt und das Zündsignal ausgelöst wird.

Für das aus zusammengefaltetem Airbag und Gaserzeuger mit Zünder bestehende Airbag-Modul ist bei modernen Fahrzeugen in der Karosserie ein entsprechender Einbauraum vorgesehen, der im allgemeinen mit einer auf die Einbauumgebung abgestimmten Abdeckung so verschlossen ist, daß der Airbag beim raschen Aufblasen ungehindert austreten kann. Daraus ergeben sich für das Airbag-Modul zwei Forderungen:
Es muß Anschlüsse aufweisen, damit es unter der Abdeckung im Einbauraum befestigt werden kann und es muß im Hinblick auf Lagerung, Transport,
Einbauvorbereitung, Montage und normale Beanspruchung während der üblichen Lebensdauer eines Fahrzeugs geschützt untergebracht sein.
Für einen ähnlichen Zweck ist in der DE-A-41 37 691 eine Gassack-Einheit vorgeschlagen worden, bei der um den gefalteten Gassack und die Gasgeneratoraufnahme ein Schrumpfschlauch mit einer Sollbruchstelle in Entfaltungsrichtung des Gassacks aufgeschrumpft ist. Dabei macht jedoch die Dimensionierung der Sollbruchstelle erhebliche Schwierigkeiten, weil der verbleibende Materialquerschnitt ausreichend sein muß, um allen beim Schrumpfvorgang und während der Fahrzeuglebensdauer auftretenden Zugkräften Stand halten zu können, andererseits aber kein unkalkulierbares Hindernis darstellen darf, wenn der Gassack bestimmungsgemäß explosionsartig aufreißt.

Das gilt auch für die aus der DE-A-43 13 616 bekannte Schrumpffolie oder Folienbanderole, wenn diese nicht nur zur Zwischenlagerung des Gassacks verwendet und vor der Endmontage entfernt werden.

Um den obengenannten Forderungen genügen zu können, ist außerdem bereits eine Vielzahl von Gehäusen oder dergleichen vorgeschlagen worden, die die vorgenannten Funktionen mehr oder weniger gut erfüllen, die jedoch überwiegend viel zu aufwendig ausgestaltet sind und dazu insbesondere ein relativ hohes Gewicht aufweisen. Die bekannten Gehäuse sind in der Regel aus Metall und/oder Kunststoff hergestellt, wobei erhebliche Bemühungen darauf gerichtet sind, einerseits den aus einem reißfesten, textilen Gewebe bestehenden Airbag im Gehäuse zu befestigen und andererseits das Gehäuse mit Anschlußteilen auszustatten, die am Einbauort eine sichere Verbindung mit der Karosserie ermöglichen. Derartige Gehäuse sind bei der angestrebten, möglichst rationellen, ökonomischen und ökologischen Fahrzeugherstellung oft nicht akzeptabel. Daraus ergibt sich die Aufgabe, die vorgenannten Schutzfunktionen für ein Airbag-Modul möglichst material- und gewichtssparend zu realisieren, ohne Abstriche bei der Sicherung des Airbag-Moduls gegen Verschmutzung und jegliche Art von Beschädigung in Kauf nehmen zu müssen.

Zur Lösung dieser Aufgabe wird erfindungsgemäß ein flexibler Behälter der eingangs genannten Art vorgeschlagen, der gekennzeichnet ist durch einen textilen Materialabschnitt mit einem im wesentlichen rechteckigen Basisteil, der am fertigen Behälter den Boden sowie die Vorder- und die Rückwand bildet, und zwei mit dem Basisteil verbundenen textilen Seitenteilen, die am fertigen Behälter die Seitenwände und eine die Behälteröffnung schließende Abdeckung bilden, wobei die Seitenteile in Schließstellung einander teilweise überlappend angeordnet sind und wobei ein Seitenteil im Überlappungsbereich einen Schlitz und das andere Seitenteil endseitig eine Lasche aufweist, die durch den Schlitz hindurchsteckbar ist, wodurch im Überlappungsbereich eine bei Zündung des Airbags lösbare Verbindung zwischen den Seitenteilen herstellbar ist.

Damit wird ein flexibles Gehäuse geschaffen, das mit dem praktisch geringsten Materialaufwand alle Schutzfunktionen erfüllen kann, das äußerst leicht ist und das anders als starre Gehäuse eingebaut keinerlei störende Klappergeräusche erzeugen kann. Für die Festlegung des Airbag-Moduls kann der rohrförmige Gaserzeuger benutzt werden, wie dies teilweise schon bei bekannten Airbag-Modulen gemacht wird. Es genügt, an den beiden Stirnseiten des Gasgenerators geeignete und angepaßte Anschlußteile anzubringen, die mit der Karosserie verbunden werden können, denn der Airbag selbst kann - wie ebenfalls schon bekannt - mittels einer Schlaufe um den Gasgenerator herum zuverlässig gehalten werden. Der erfindungsgemäße flexible Behälter wird so gemessen, daß er eng am Gasgenerator und zusammengefalteten Airbag anliegt und öffnungsseitig mittels Schlitz und Lasche für den normalen Gebrauch sicher verschlossen ist, sich bei Zünden aber leicht öffnet und kein Hindernis für den sich durch die Öffnung rasch entfaltenden Airbag darstellt.

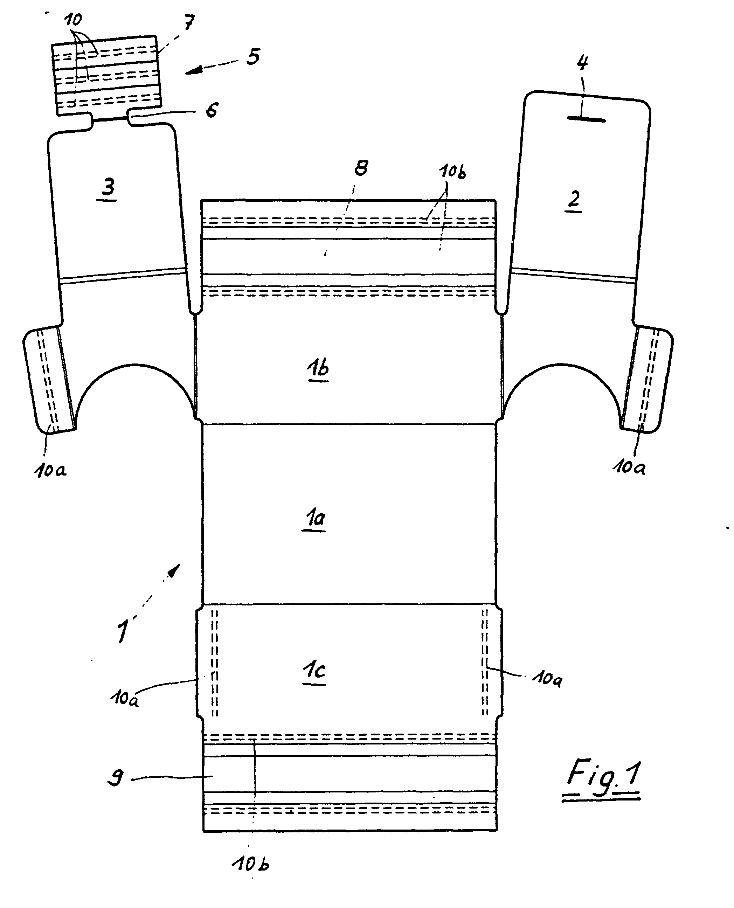

Vorteilhafte Weiterbildungen des Erfindungsgedankens sind in den Unteransprüchen 2 bis 6 beschrieben. Weitere Einzelheiten werden anhand des in Fig. 1 dargestellten Ausführungsbeispiels näher erläutert.

Fig. 1 zeigt einen textilen Materialabschnitt, der einstückig aus einer Textilbahn ausgeschnitten sein kann oder aber auch aus mehreren Teilen zusammengesetzt sein kann, wenn die dabei mögliche Materialersparnis höher zu veranschlagen ist als der zum Zusammenfügen erforderliche Aufwand. Der Materialabschnitt umfaßt einen im wesentlichen rechteckigen Basisteil 1, der am fertigen Behälter den Boden 1a sowie die Vorder - und die Rückwand 1b, 1c bildet sowie zwei mit dem Basisteil 1 verbundene, textile Seitenteile 2, 3, die am fertigen Behälter die Seitenwände und eine die Behälteröffnung schließende Abdeckung bilden. Die Seitenteile 2, 3 sind an ihrer unteren Begrenzung halbkreisförmig ausgeschnitten und damit an den rohrförmigen Gasgenerator angepaßt, dessen Länge größer ist, als die Breite des rechteckigen Basisteiles 1, so daß der rohrförmige Gasgenerator rechts und links aus dem flexiblen Behälter vorsteht und somit stirnseitig mit der Karosserie verbunden werden kann, ohne daß der erfindungsgemäße Behälter insoweit an die Einbauverhältnisse angepaßt werden müßte.

Die Seitenteile 2,3 sind in Schließstellung einander teilweise überlappend angeordnet, so daß die in dem einen Seitenteil 3 endseitig ausgebildete Lasche 5 durch den im anderen Seitenteil 2 vorgesehenen Schlitz hindurchsteckbar ist. Auf diese Weise wird im Überlappungsbereich der Seitenteile 2,3 eine lösbare Verbindung hergestellt, die bei einer Zündung des Airbags leicht zu öffnen ist und durch Hochklappen der Seitenteile 2, 3 eine Austrittsöffnung für den sich entfaltenden Airbag freigibt.

Die Lasche 5 umfaßt einen schmalen Halsabschnitt 6 und einen etwa rechteckigen äußeren Materialbereich 7, der zur Versteifung übereinandergefaltet und zwei- oder mehrlagig miteinander verbunden werden kann, wodurch die Schließ- bzw. Öffnungskraft der Lasche-Schlitz-Verbindung an die jeweiligen Erfordernisse angepaßt werden kann. Die durch Nähen oder Kleben herstellbaren Verbindungen des textilen Materials sind im rechteckigen Materialbereich 7 der Lasche 5 mit 10 bezeichnet. Mit 10a sind die Verbindungsstellen bezeichnet, an denen die Seitenteile 2, 3 mit der Rückwand 1c verbunden werden. Außerdem sind noch Verbindungsbereiche 10b bezeichnet, mittels derer an den äußeren Enden von Vorder- und Rückwand 1b, 1c schlaufenartige Aufnahmebereiche 8, 9 ausgebildet werden können, in die stabartige, metallische Bauteile eingesetzt werden können, wenn dies zur Verstärkung oder Befestigung des textilen Behälters erforderlich sein sollte.

## Patentansprüche

1. Flexibler Behälter für die Unterbringung eines zusammengefalteten Airbags und eines rohrförmigen Gasgenerators, **gekennzeichnet durch** einen textilen Materialabschnitt mit einem im wesentlichen rechteckigen Basisteil (1), der am fertigen Behälter den Boden (1a) sowie die Vorder- und die Rückwand (1b, 1c) bildet, und zwei mit dem Basisteil (1) verbundenen textilen Seitenteilen (2, 3), die am fertigen Behälter die Seitenwände und eine die Behälteröffnung schließende Abdeckung bilden, wobei die Seitenteile (2, 3) in Schließstellung einander teilweise überlappend angeordnet sind und wobei ein Seitenteil (2) im Überlappungsbereich einen Schlitz (4) und das andere Seitenteil (3) endseitig eine Lasche (5) aufweist, die **durch** den Schlitz (4) hindurchsteckbar ist, wodurch im Überlappungsbereich eine bei Zündung des Airbags lösbare Verbindung zwischen den Seitenteilen (2, 3) herstellbar ist.

2. Behälter nach Anspruch 1, **dadurch gekennzeichnet, daß** Basisteil (1) und Seitenteile (2, 3) aus einem einstückigen, textilen Materialabschnitt bestehen, bei dem zur Ausbildung des Behälters die Ränder teilweise miteinander verbunden sind.

3. Behälter nach Anspruch 1, **dadurch gekennzeichnet, daß** Basisteil und Seitenteile (2, 3) aus drei textilen Materialabschnitten bestehen, deren Ränder zur Ausbildung des Behälters teilweise miteinander verbunden sind.

4. Behälter nach einem der Ansprüche 1 - 3, **dadurch gekennzeichnet, daß** die Lasche (5) aus einem über einen Halsabschnitt (6) einstückig mit einem Seitenteil (3) verbundenen, etwa rechteckigen Materialbereich (7) besteht, der zur Versteifung übereinandergefaltet und zwei- oder mehrlagig miteinander verbunden ist.

5. Behälter nach einem der Ansprüche 1 - 4, **dadurch gekennzeichnet, daß** im Basisteil (1) durch Übereinanderlegen und Verbinden schlaufenartige Aufnahmebereiche (8, 9 ) für stabartige, metallische Bauteile zur Verstärkung oder Befestigung des textilen Behälters ausgebildet sind.

6. Behälter nach einem der Ansprüche 1 - 5, **dadurch gekennzeichnet, daß** die Verbindungen (10, 10a, 10b) des textilen Materials durch Nähen oder Kleben hergestellt sind.

## Claims

1. A flexible container for accommodating a folded airbag and a tubular gas generator, **characterized by** a blank of textile material having a substantially rectangular base part (1) which constitutes the bottom (la) and the front and rear walls (1b, 1c) of the finished container, and two lateral textile parts (2, 3) connected to the base part (I) which constitute the side walls and a cover closing the container opening of the finished container, the lateral parts (2, 3) being arranged so as to partially overlap each other when in the closed position, and one lateral part (2) having a slit (4) in the overlapping portion and the other lateral part (3) having a tab (5) at its end which can be inserted through the slit (4), whereby in the overlapping portion a connection can be established between the lateral parts (2, 3) which is adapted to be released upon activation of the airbag.

2. The container according to claim 1, **characterized in that** the base part (1) and the lateral parts (2, 3) are made of a one-piece blank of textile material, the edges of which are partially connected with each other to form the container.

3. The container according to claim 1, **characterized in that** the base part and the lateral parts (2, 3) are made of three blanks of textile material, the edges of which are partially connected with each other to form the container.

4. The container according to any of claims 1 to 3, **characterized in that** the tab (5) consists of an approximately rectangular area of material (7) integrally connected with one lateral part (3) by way of a neck portion (6) and folded over itself and interconnected in two or multiple layers to stiffen it.

5. The container according to any of claims 1 to 4, **characterized in that** loop-type receiving areas (8, 9) are formed in the base part (1) by folding back and connecting to receive rod-like metallic components for reinforcing or securing the textile container.

6. The container according to any of claims 1 to 5, **characterized in that** the connections (10, 10a, 10b) of the textile material are produced by sewing or bonding.

## Revendications

1. Récipient flexible pour le logement d'un coussin à gaz replié et d'un générateur de gaz de forme tubulaire, **caractérisé par** un tronçon de matériau flexible avec une partie de base (1) sensiblement rectangulaire qui forme sur le récipient fini le fond (la) ainsi que les parois avant et arrière (1b, 1c), et par deux parties latérales (2, 3) textiles reliées à la partie de base (1) et qui forment sur le récipient fini les parois latérales et un couvercle fermant l'ouverture du récipient, les parties latérales (2, 3) étant agencées en position de fermeture en se chevauchant en partie mutuellement, et une partie latérale (2) présentant dans la zone de chevauchement une fente (4) et l'autre partie (3) présentant à l'extrémité une patte (5) que l'on peut faire passer à travers la fente (4), grâce à quoi on peut établir dans la zone de chevauchement une liaison détachable entre les deux parties latérales (2, 3) lorsqu'on amorce le coussin à gaz.

2. Récipient selon la revendication 1, **caractérisé en ce que** la partie de base (1) et les parties latérales (2, 3) sont constituées par un tronçon de matériau textile d'un seul tenant dans lequel les bords sont reliés en partie les uns aux autres pour réaliser le récipient.

3. Récipient selon la revendication 1, **caractérisé en ce que** la partie de base et les parties latérales (2, 3) sont constituées par trois tronçons de matériau textile dont les bords sont reliés en partie les uns aux autres pour réaliser le récipient.

4. Récipient selon l'une des revendications 1 à 3, **caractérisé en ce que** la patte (5) est constituée par une zone de matériau (7) approximativement rectangulaire reliée d'un seul tenant à une partie latérale (3) par l'intermédiaire d'un tronçon de col (6), qui est repliée sur elle-même pour créer un renforcement et dont deux ou plusieurs couches sont reliées les unes aux autres.

5. Récipient selon l'une des revendications 1 à 4, **caractérisé en ce que** dans la partie de base (1), des zones de réception (8, 9) en forme de boucles sont réalisées en étant posées les unes sur les autres et reliées, et sont destinées à des composants métalliques en forme de barres pour le renforcement ou la fixation du récipient textile.

6. Récipient selon l'une des revendications 1 à 5, **caractérisé en ce que** les liaisons (10, 10a, 10b) du matériau textile sont réalisées par couture ou par collage.
